# EUROPÄISCHE PATENTSCHRIFT

(11) **EP 3 771 053 B1**
(45) Veröffentlichungstag und Bekanntmachung des Hinweises auf die Patenterteilung: **22.05.2024**
(21) Anmeldenummer: 20187020.1
(22) Anmeldetag: 21.07.2020
(51) Int. Cl.: H02H 1/00, H02H 7/22, H02H 7/08, H01H 9/50

(54) **STÖRLICHTBOGENÜBERWACHUNGSEINRICHTUNG INSBESONDERE FÜR NIEDERSPANNUNGSSCHALTANLAGEN**
ARCING FAULT MONITORING DEVICE, PARTICULARLY FOR LOW-VOLTAGE SWITCHGEAR
DISPOSITIF DE SURVEILLANCE D'ARC ÉLECTRIQUE PARASITE, EN PARTICULIER POUR LES INSTALLATION DE COMMUTATION BASSE TENSION

(30) Priorität: 26.07.2019 DE 102019211162
(43) Veröffentlichungstag der Anmeldung: 27.01.2021
(73) Patentinhaber: Siemens Aktiengesellschaft, 80333 München (DE)
(72) Erfinder: Schmidt, Mario, 04178 Leipzig (DE)
(74) Vertreter: Siemens Patent Attorneys

(56) Entgegenhaltungen:
- EP-A2- 2 463 975
- CN-A- 105 356 426
- DE-A1- 19 830 643
- DE-A1-102015 218 052
- DE-C2- 19 830 643
- US-A- 5 886 861
- US-A1- 2019 044 317

## Beschreibung

Die Erfindung betrifft einen Einschub mit einer Störlichtbogenüberwachungseinrichtung insbesondere für Niederspannungsschaltanlagen mit Einspeisefeldern und Abgangsfeldern.

Niederspannungsschaltanlagen bestehen in der Regel aus Einspeisefeldern, Kupplungen und Abgangsfeldern. In den Einspeisefeldern ist normalerweise ein Einspeiseschalter, meistens ein ACB, installiert, welcher die Anlage vor Kurzschluss, Überlast und inneren Fehlern schützt. Die Abgangsfelder enthalten oft mehrere Abzweige zur Ansteuerung der angeschlossenen Verbraucher. Auf den Abzweigmodulen befindet sich jeweils als Schutzorgan ein Hauptschalter, welcher wiederum den Abzweig vor Kurzschluss, Überlast und inneren Fehlern nachgeordnet zu einem Schutzorgan schützt.

Bei Fehlern vor diesen Schutzorganen, insbesondere primären Fehlern, oder Versagen dieser, muss der Einspeiseschalter der Schaltanlage den Fehler abschalten. Die Abschaltzeiten dieser als Einspeiseschalter eingesetzten ACB-Leistungsschalter ab dem Auftreten eines Fehlers betragen in der Praxis ca. 50 ms und mehr. Im Fall eines inneren Fehlers auf einem Abzweig sind die durch den Störlichtbogen entstandenen Schäden in der Schaltanlage nach dieser Zeit bereits erheblich.

Aus DE 198 30 643 A1, US 5,886,861 A und DE 10 2015 218 052 A1 sind Störlichtbogenüberwachungseinrichtungen für Niederspannungsschaltanlagen bekannt.

In den letzten Jahren haben sich Störlichtbogenüberwachungseinrichtungen für Niederspannungsschaltanlagen etabliert, die auf Lichtblitze durch Lichtbögen oder Lichtblitze und einem Stromanstieg reagieren und zu einer Abschaltung nach wenigen Millisekunden führen. Jedoch ist eine Überwachung der Funktionsräume der Abzweige über Lichtblitze problematisch, da auch bei normalen Kurzschlussabschaltungen durch die Schalter, zumeist MCCB's, oder Sicherungen Lichtblitze erzeugt werden, und es dann zu Fehlmeldungen kommen kann, welche zum versehentlichen Abschalten der ganzen Schaltanlage führen.

Bei einer Abschaltung der gesamten Niederspannungsschaltanlage würden alle daran angeschlossenen Verbraucher ausfallen. Dies ist jedoch nur bei einem Störlichtbogen primärseitig, also vor dem Schutzorgan in den Abzweigen, in der Schaltanlage akzeptabel.

Es ergeben sich somit bisher die nachfolgenden Probleme:
- Die Funktionsräume mit MCCB's können wegen des Risikos der Fehlauslösung bei einer Kurzschlussabschaltung nicht über die Erfassung von Lichtblitzen auf Störlichtbögen überwacht werden. Die Störlichtbögen können erst durch Abschaltung des Einspeiseschalters (ACB) in der Niederspannungsschaltanlage nach >50ms gelöscht werden.
- Ein Störlichtbogen in diesen Funktionsräumen lässt sich auf Grund der freigesetzten Energie nur für einen gewissen Zeitraum auf das Abzweigfach begrenzen.
- Bei Einschüben, insbesondere unter Spannung auswechselbaren Abzweigen, führt ein nicht schnell erfolgter Abschaltvorgang des Störlichtbogens auf Grund der zu hohen Energie zu einem Abbrennen der eingangsseitigen Steckkontakte. Dabei wird auch die Feldsteckschiene beschädigt und muss bei einer Reparatur aufwendig getauscht werden.

Bei aktuellen Niederspannungsschaltanlagen ist zwar ein gewisser Personenschutz bei einem Störlichtbogen im Abzweigfach gegeben, jedoch können bei länger brennenden Störlichtbögen Verbrennungen nicht ganz ausgeschlossen werden.

Die bekannten Störlichtbogenüberwachungseinrichtungen, welche einen internen Fehler sehr schnell abschalten können, reagieren auf Lichtblitze und optional zusätzlich auf einen Stromanstieg. Bei der Kurzschlussabschaltung eines MCCBs kann das System in der notwendigen kurzen Zeit nicht zwischen einem normalen Kurzschluss und primärseitigem Störlichtbogen unterscheiden. Ein Störlichtbogenschutz der Abgangsfelder über die Erfassung von Lichtblitzen ist momentan nur für Räume ohne Leistungsschalter sicher möglich. Die Feldschiene könnte man durch den Einbau eines Schutzorgans am Einspeisepunkt vor inneren Fehlern schützen, jedoch erfordert diese Lösung viel Raum und kann Probleme hinsichtlich der Selektivität der Schalter in den Abzweigen bereiten.

Aus diesem Grund werden nur die Hauptsammelschienen, Feldverteilschienen und Kabelanschlüsse durch Störlichtbogenerkennungseinrichtungen überwacht, jedoch nicht die Fächer mit den Abzweigen. Bisher ist keine praktikable Lösung bekannt, welche die Fächer mit den Abzweigen auf primärseitige Störlichtbögen sicher überwacht und Fehlauslösungen ausschließt.

Derzeitig ist auch kein Überwachungssystem bekannt, welches auf Einschüben Fehler wie Störlichtbögen zuverlässig erkennt und so schnell abschaltet, dass die eingangsseitigen Trennkontakte im Einschub bzw. die Steckschiene im Feld zuverlässig vor Überlast geschützt werden.

Demgemäß besteht die Aufgabe der vorliegenden Erfindung darin, eine Störlichtbogenüberwachungseinrichtung insbesondere für Niederspannungsschaltanlagen zu schaffen, welche zuverlässig in den Abgangsfeldern einen fehlerhaften Stromfluss erkennt und einen Abschaltvorgang auslöst.

Diese Aufgabe wird erfindungsgemäß durch einen Einschub für eine Niederspannungsschaltanlage mit einer Störlichtbogenüberwachungseinrichtung nach Anspruch 1 gelöst. Vorteilhafte Aus- und Weiterbildungen, welche einzeln oder in Kombination miteinander eingesetzt werden können, sind der Gegenstand der abhängigen Ansprüche.

Die Erfindung zeichnet sich dadurch aus, dass in den Abgangsfeldern oder jeweils in den darin befindlichen Abzweigen ein Erfassungs- und Berechnungsmodul angeordnet ist, welches einen Stromfluss misst, pro Zeiteinheit auswertet und sicher einen vor jeweiligen Schutzorganen entstandenen Störlichtbogen von einem normalen Kurzschluss unterscheidet.

Der Kern der Erfindung besteht darin, die fließenden elektrischen Ströme in sehr kurzen Intervallen zu ermitteln und mit Hilfe eines schnellen Erfassungs- und Berechnungsmoduls auszuwerten. Es ist auch möglich, die I² x t-Werte je Zeiteinheit im Mikrosekundenbereich zu bestimmen. Als Schutzorgan für die Abzweige werden vorzugsweise Sicherungen oder MCCB's (Moulded case circuit breaker) eingesetzt. Beide Gerätearten begrenzen den maximal fließenden Kurzschlussstrom und schalten einen Kurzschluss nach wenigen Millisekunden ab. Die dabei je Schaltertyp maximal fließenden I² × t-Werte, also der quadrierte Strom je Zeiteinheit, sind bekannt und können als Bezugsgröße herangezogen werden.

Sind die fließenden Ströme größer als die Strombegrenzung der entsprechenden Schutzorgane, kann nur ein Fehler in oder vor diesen vorliegen. Nach Auswertung der Abschaltkurven kann ein solcher Fehler nach ca. 1,5 ms erkannt werden. Bei kleinen Kurzschlussströmen können Fehler über die I² × t-Werte je Zeiteinheit z.B. 3ms erkannt werden, wenn diese die normalen Werte der Schutzorgane deutlich überschreiten. Auch bei sehr kleinen Kurzschlussströmen können Fehler durch die Betrachtung der I² × t-Werte über einen längeres Zeitintervall sicher erkannt werden, wenn die Werte deutlich höher sind, als es die Schutzorgane zulassen. Ermittelt das Erfassungs- und Berechnungsmodul, dass auf Grund der ausgewerteten Daten ein innerer primärer Fehler vorliegen muss, kann dieser über ein in der Anlage installiertes AQD-Gerät (Arc Quenching Device) die Anlage in wenigen Millisekunden kurzschließen und damit den Störlichtbogen zum Erlöschen bringen. Nachgeordnet erfolgt die Abschaltung des Stroms über den in der Anlage vorhandenen Einspeiseschalter.

Alternativ könnte ein schneller Trenner den Stromfluss unterbrechen. Größere Schäden in der Schaltanlage werden dadurch ebenfalls vermieden. Fehlauslösungen durch anderweitig in der Anlage generierte Lichtblitze können ausgeschlossen werden.

Bei Abzweigen in Einschubtechnik sind die Trennkontakte der Einschübe auf das Tragen der maximalen Durchlassströme bzw. der I² × t-Werte des jeweiligen Schutzorgans ausgelegt. Bisher konnten bei einem primären Fehler auf einem Abzweig die Trennkontakte die hohen Energien nicht mehr tragen und wurden zerstört, wodurch auch die Feldschiene beschädigt wurde. Um den Schaden zu reparieren, musste die gesamte Feldschiene aufwendig ausgebaut und getauscht werden. Durch die neue erfindungsgemäße Überwachungseinrichtung kann durch die rechtzeitige Erkennung eines internen primären Fehlers und der schnellen Störlichtbogenlöschung über ein AQD eine Beschädigung der Trennkontakte und der Feldschiene vermieden werden.

Die Strommessung erfolgt durch eine Rogowskispule. Diese Rogowskispulen benötigen wenig Raum und lassen sich damit leicht in bestehende Schaltanlagen integrieren. Diese Strommessung ist an der Verbindung Feldschiene zum Abzweig zur Überwachung einzelner Abzweige integriert. Dies ist für Abzweige in Einschubtechnik interessant, da man damit sicherstellen kann, dass die zulässigen Werte je Zeiteinheit für das jeweilige Kontaktsystem angepasst und damit nicht überschritten werden. Somit können auch Kontaktsysteme für Abzweige mit kleineren Strömen bei einem Fehler vor dem Schutzorgan auf dem Abzweig sicher geschützt werden.

Die erfindungsgemäße Störlichtbogenüberwachungseinrichtung zeichnet sich dadurch aus, dass die Erkennung von Störlichtbögen oder Fehlern vor dem Abzweigschutzorgan durch die Überwachung und Auswertung der fließenden Ströme und I² x t-Werte in Abgangsfeldern oder Abzweigen von Niederspannungsschaltanlagen erfolgt. Werden deutlich höhere I² x t-Werte erfasst, als die Schutzorgane in den Abgangsfeldern oder auf Abzweigen zulassen, muss ein primärseitiger Fehler oder ein Versagen des Schutzorganes vorliegen. Wird ein solcher Fehler erkannt, erfolgt die Aktivierung eines AQD und Auslösung des Einspeiseschalters oder eines schnellen Trenners, wodurch der Fehler innerhalb weniger Millisekunden abgeschaltet wird. Durch das schnelle Erkennen und Abschalten eines primären Fehlers wird der entstehende Schaden minimiert. Die Feldschiene und die eingangsseitigen Einschubkontakte werden so vor Beschädigung geschützt.

Durch diese Lösung wird es möglich einen Hauptstromkreis vom Abgriff von der Hauptsammel- oder Feldschiene mit allen Geräten zuverlässig vor inneren Fehlern oder Fehlerfolgen in Form eines Backup-Schutz zu schützen. Interessant ist diese vorgeschlagene Lösung vor allem für Motor-Control-Center mit unter Spannung herausnehmbaren Abzweigen als Einschüben. Diese Einschübe weisen ein Eingangskontaktsystem auf, welches für die Durchlasskennwerte der auf diesen Abzweigen installierten Schutzorgane (MCCB, Sicherung) ausgelegt ist. Ist die zulässige Durchlassenergie deutlich höher als die der Geräte auf dem Abzweig, kann das Kontaktsystem sicher vor einem zu hohen, kritischen Energiefluss geschützt werden, welcher nur im Fehlerfall eintreten kann. Mit der beschriebenen Lösung muss bei der Auslegung des Kontaktsystems zu den gesetzten I² x t-Grenzen die Schaltzeit des AQD berücksichtigt werden.

In der Praxis ist es so, dass es ohne rechtzeitige Erkennung und Abschaltung eines primären Störlichtbogens mit einer zu hohen Durchflussenergie zu einem Aufschmelzen des Kontaktsystems am Stromübergang zur meistens vertikal angeordneten Feldverteilschiene kommt. Damit ist nicht nur der Kontakt beschädigt, sondern auch die Feldverteilschiene. Diese lässt sich nur bei spannungsfrei geschalteter Schaltanlage austauschen. Daher ist mit dieser Lösung auch ein sicherer Schutz der Feldverteilschiene möglich, wodurch die Verfügbarkeit der Niederspannungsschaltanlagen deutlich erhöht werden kann.

Eine vorteilhafte Ausführungsform für das erfindungsgemäße Konzept der Störlichtbogenüberwachungseinrichtung kann darin bestehen, dass das Erfassungs- und Berechnungsmodul die I² *t-Werte im Mikrosekundenbereich ermittelt und auswertet.

Eine Fortführung des erfindungsgemäßen Konzepts für die Störlichtbogenüberwachungseinrichtung kann darin bestehen, dass als Schutzorgan in den Abzweigen Sicherungen und/oder MCCB's (Moulded case circuit breaker) und/oder andere stromführende Elemente mit einer Schutzfunktion und/oder stromführende Elemente mit einer Schutzfunktion mindestens einer weiteren Funktion, also ein kombiniertes Gerät, angeordnet sind.

Eine Erweiterung einer speziellen Ausgestaltung des erfindungsgemäßen Konzepts für die Störlichtbogenüberwachungseinrichtung kann vorsehen, dass ein Stromfluss oberhalb einer durch die Schutzorgane vorgegebenen Strombegrenzung für einen regulären Stromfluss als fehlerhafter Stromfluss im Erfassungs- und Berechnungsmodul hinterlegt ist.

Eine vorteilhafte Ausführungsform für das erfindungsgemäße Konzept einer Störlichtbogenüberwachungseinrichtung kann darin bestehen, dass mittels eines AQD-Geräts (Arc Quenching Device) ein Kurzschluss zu erzeugen ist, welcher zu einem Spannungsabfall in der Anlage und zu einem Verlöschen des Lichtbogens führt, d.h., um im ermittelten Fehlerfall den Störlichtbogen unverzüglich zu löschen.

Eine Fortführung des erfindungsgemäßen Konzepts für die Störlichtbogenüberwachungseinrichtung kann darin bestehen, dass eine Abschaltung des Stromflusses nachgeordnet zum Kurzschluss durch den AQD über einen Einspeiseschalter ausgebildet ist.

Eine Erweiterung einer speziellen Ausgestaltung des erfindungsgemäßen Konzepts für die Störlichtbogenüberwachungseinrichtung kann vorsehen, dass eine Abschaltung des Stromflusses nachgeordnet zum Kurzschluss über einen schnellen Trenner oder einen Trennschalter oder ein stromführendes Element mit einer Trennerfunktion oder ein stromführendes Element mit einer Trennerfunktion und mindestens einer weiteren Funktion, also ein kombiniertes Gerät, ausgebildet ist.

Ein Aspekt des erfindungsgemäßen Konzepts für die Störlichtbogenüberwachungseinrichtung besteht darin, dass eine Strommessung über eine Rogowskispule ausgebildet ist.

Es entspricht dem erfindungsgemäßen Konzept für die Störlichtbogenüberwachungseinrichtung, dass die Strommessung vor dem Schutzorgan jeweils eines Abzweigs an der Verbindung zu der Feldschiene in einer Schaltanlage angeordnet ist.

Ein Aspekt des erfindungsgemäßen Konzepts für die Störlichtbogenüberwachungseinrichtung sieht vor, dass die jeweiligen Abzweige in Einschubtechnik mit der Störlichtbogenüberwachungseinrichtung ausgebildet sind, wobei die Strommessung direkt nach der Anbindung an eine Feldschiene erfolgt. Für das Ausführungsbeispiel eines Abzweigs in Einschubtechnik kann diese Lösung zusätzlich zum Schutz der Trennkontakte vor Überlastung bei zulässig hohem Stromfluss pro Zeit genutzt werden.

Eine Fortführung des erfindungsgemäßen Konzepts für die Störlichtbogenüberwachungseinrichtung kann darin bestehen, dass jeweilige Trennkontakte der Abzweige in Einschubtechnik und Kontaktierungsflächen an der Feldschiene vor Beschädigung durch zu große fließende Ströme je Zeiteinheit mittels des Erfassungs- und Berechnungsmoduls zu schützen sind.

Weitere Ausführungen und Vorteile der Erfindung werden nachfolgend anhand von Ausführungsbeispielen sowie anhand der Zeichnung erläutert.

Dabei zeigt:
Fig. 1 in einer schematischen Darstellung ein Abgangsfeld insbesondere einer Niederspannungsschaltanlage mit Abzweigen in Festeinbau- und Einschubtechnik;
Fig. 2 in einer seitlichen Schnittdarstellung einen nicht beanspruchten Schaltanlagenaufbau mit Abzweigen, vertikalen Feldverteil- bzw. Steckschienen, horizontalen Hauptsammelschienen, die Lage der Rogowskispulen auf einer Verbindung zwischen einer vertikalen Feldverteil- bzw. Steckschiene und einer horizontalen Hauptsammelschiene und das Erfassungs- und Berechnungsmodul für eine erfindungsgemäße Störlichtbogenüberwachungseinrichtung auf einer Feldschiene;
Fig. 3 in einer perspektivischen Darstellung den Aufbau eines erfindungsgemäßen Abzweigmoduls in Einschubtechnik mit dem Erfassungs- und Berechnungsmodul für die kontinuierliche Ermittlung der I² × t- Werte und einem Hauptschalter mit seinen primärseitigen Anschlüssen;
Fig. 4 in einer Draufsicht ein erfindungsgemäßes Abzweigmodul in Einschubtechnik;
Fig. 5 in einer perspektivischen Darstellung einen vergrößerten Ausschnitt aus Fig. 4 mit eingangsseitigen Trennkontakten und die gleich im Anschluss je Phase für die Stromerfassung angeordneten Rogowskispulen oder vergleichbaren Elemente zur Stromerfassung.

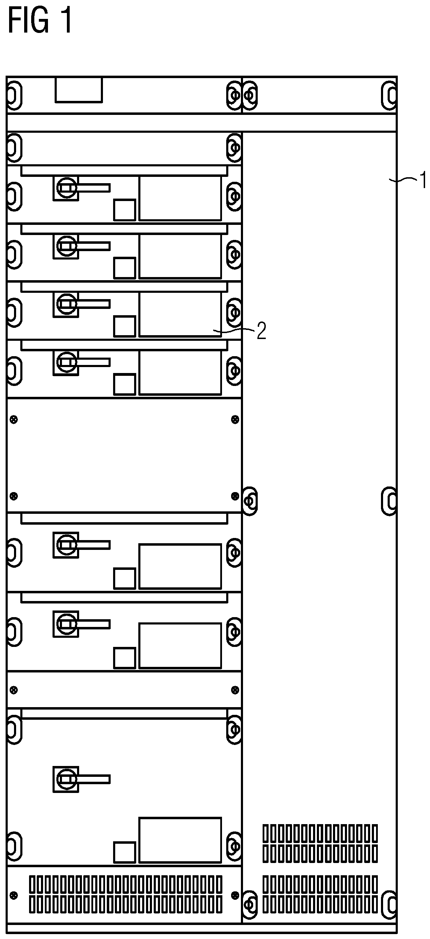

Fig. 1 zeigt ein Abgangsfeld 1 insbesondere einer Niederspannungsschaltanlage mit Abzweigen 2 in Festeinbau- und Einschubtechnik.

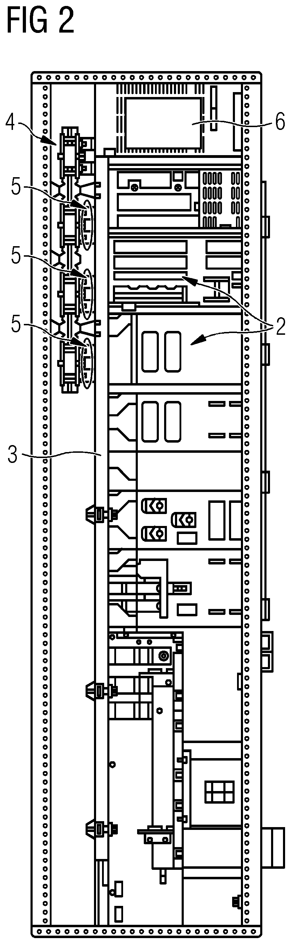

In Fig. 2 ist ein nicht beanspruchter Schaltanlagenaufbau dargestellt mit Abzweigen 2, vertikalen Feldverteil- bzw. Steckschienen 3, horizontalen Hauptsammelschienen 4, den Rogowskispulen 5 auf einer Verbindung zwischen einer vertikalen Feldverteil- bzw. Steckschiene 3 und einer horizontalen Hauptsammelschiene 4 und das Erfassungs- und Berechnungsmodul 6 für eine erfindungsgemäße Störlichtbogenüberwachungseinrichtung auf einer Feldschiene.

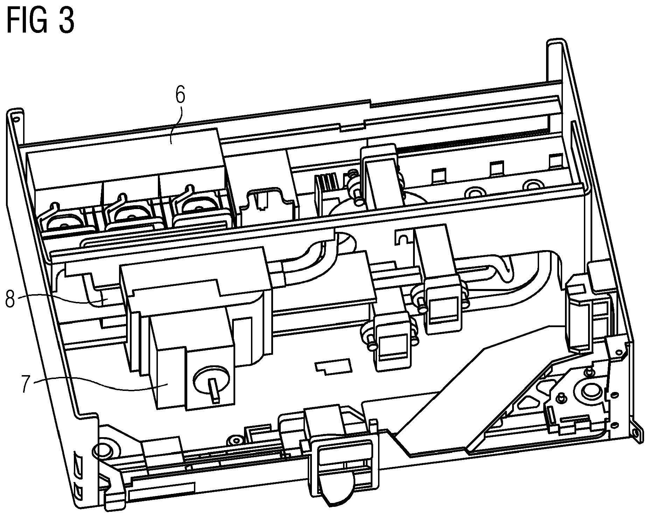

Fig. 3 zeigt den Aufbau eines erfindungsgemäßen Abzweigmoduls in Einschubtechnik mit Erfassungs- und Berechnungsmodul 6 beispielsweise für die kontinuierliche Ermittlung der I² × t- Werte und einem Hauptschalter 7 mit seinen primärseitigen Anschlüssen 8.

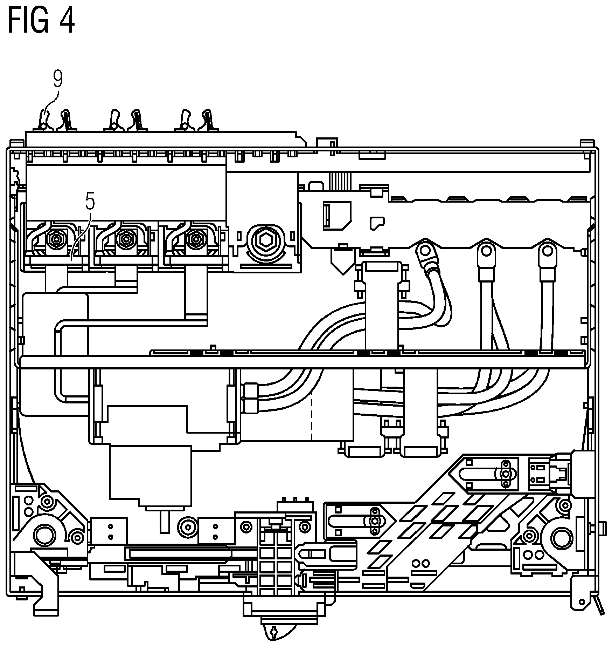

Fig. 4 in einer Draufsicht ein erfindungsgemäßes Abzweigmodul in Einschubtechnik mit Trennkontakten 9 und den Rogowskispulen 5 für die Strommessung.

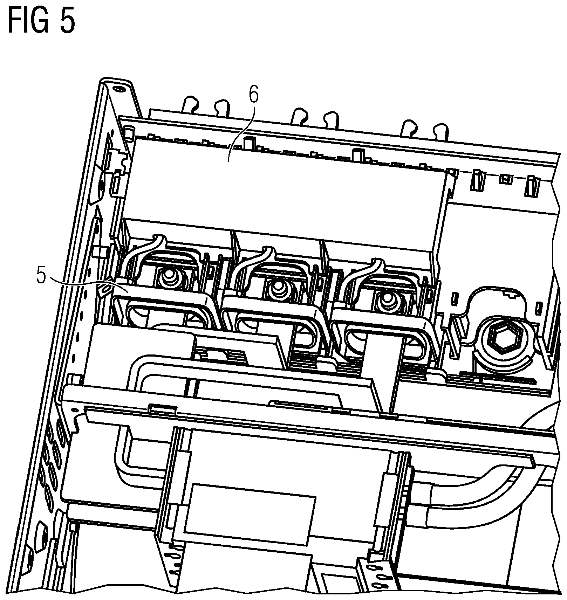

In Fig. 5 sind in einem vergrößerten Ausschnitt nach Fig. 4 eingangsseitige Trennkontakte 9, die dahinter je Phase für die Stromerfassung angeordneten Rogowskispulen 5 sowie das Erfassungs- und Berechnungsmodul 6 in einem Abzweigmodul dargestellt.

Die erfindungsgemäße Störlichtbogenüberwachungseinrichtung zeichnet sich dadurch aus, dass die Erkennung von Störlichtbögen oder Fehlern vor dem Abzweigschutzorgan durch die Überwachung und Auswertung der fließenden Ströme und I² x t-Werte in Abgangsfeldern oder Abzweigen von Niederspannungsschaltanlagen erfolgt. Werden deutlich höhere I² x t-Werte erfasst, als die Schutzorgane in den Abgangsfeldern oder Abzweigen zulassen, muss ein primärseitiger Fehler oder ein Versagen des Schutzorganes vorliegen. Wird ein solcher Fehler erkannt, erfolgt die Aktivierung eines AQD und Auslösung des Einspeiseschalters oder eines schnellen Trenners, wodurch der Fehler innerhalb weniger Millisekunden abgeschaltet wird. Durch das schnelle Erkennen und Abschalten eines primären Fehlers wird der entstehende Schaden minimiert. Die Feldschiene und die eingangsseitigen Trennkontakte des Einschubs werden so vor Beschädigung geschützt.

### Bezugszeichenliste

- 1: Abgangsfeld
- 2: Abzweig
- 3: vertikale Feldverteil- bzw. Steckschiene
- 4: horizontale Hauptsammelschiene
- 5: Rogowskispule oder gleichwertiges Element zur Stromerfassung
- 6: Erfassungs- und Berechnungsmodul
- 7: Hauptschalter
- 8: primärseitiger Anschluss
- 9: Trennkontakt

## Patentansprüche

1. Ein Einschub für die Ausbildung eines Abzweigs einer Niederspannungsschaltanlage mit Einspeisefeldern und Abgangsfeldern, wobei der Einschub eine Störlichtbogenüberwachungseinrichtung mit einem Erfassungs- und Berechnungsmodul (6) und mit an einer elektrischen Verbindung einer Feldschiene der Niederspannungsschaltanlage zu dem Abzweig angeordneten Rogowski-Spulen (5) aufweist, wobei das Erfassungs- und Berechnungsmodul (6) dazu ausgebildet ist, mit den Rogowski-Spulen (5) einen Stromfluss zu messen, pro Zeiteinheit auszuwerten und einen vor einem Schutzorgan des Einschubs entstandenen Störlichtbogen von einem Kurzschluss zu unterscheiden, indem der gemessene Stromfluss mit einer Strombegrenzung des Schutzorgans verglichen und auf den vor dem Schutzorgan des Einschubs entstandenen Störlichtbogen zu erkennen, wenn der gemessene Stromfluss größer als die Strombegrenzung des Schutzorgans ist.

2. Der Einschub nach Anspruch 1, **dadurch gekennzeichnet, dass** das Erfassungs- und Berechnungsmodul (6) die I² *t-Werte im Mikrosekundenbereich ermittelt und auswertet.

3. Der Einschub nach Anspruch 1 oder 2, **dadurch gekennzeichnet, dass** als Schutzorgan in den Abzweigen (2) Sicherungen und/oder Moulded case circuit breaker's, MCCB's, und/oder stromführende Elemente mit einer Schutzfunktion und/oder stromführende Elemente mit einer Schutzfunktion und mindestens einer weiteren Funktion angeordnet sind.

4. Der Einschub nach einem der Ansprüche 1 bis 3, **dadurch gekennzeichnet, dass** mittels eines Arc Quenching Device - Geräts, AQD-Geräts, ein Kurzschluss zu erzeugen ist, um im ermittelten Fehlerfall den Störlichtbogen unverzüglich zu löschen.

5. Der Einschub nach Anspruch 4, **dadurch gekennzeichnet, dass** eine Abschaltung des Stromflusses nachgeordnet zum Kurzschluss durch den AQD über einen Einspeiseschalter ausgebildet ist.

6. Der Einschub nach Anspruch 4, **dadurch gekennzeichnet, dass** eine Abschaltung des Stromflusses nachgeordnet zum Kurzschluss über einen Trenner oder einen Trennschalter oder ein stromführendes Element mit einer Trennerfunktion oder ein stromführendes Element mit einer Trennerfunktion und mindestens einer weiteren Funktion ausgebildet ist.

7. Einschub nach einem der Ansprüche 1 bis 6, **dadurch gekennzeichnet, dass** jeweilige Trennkontakte (9) der Abzweige (2) in Einschubtechnik und Kontaktierungsflächen an der Feldschiene (3) vor Beschädigung durch zu große fließende Ströme je Zeiteinheit mittels des Erfassungs- und Berechnungsmoduls (6) zu schützen sind.

## Claims

1. Plug-in unit for forming a branch to a low-voltage switchgear having incoming feeder cubicles and outgoing feeder cubicles, wherein the plug-in unit has an arcing fault monitoring device having a measurement and calculation module (6) and having Rogowski coils (5) arranged at an electrical connection of a cubicle busbar of the low-voltage switchgear to the branch, wherein the measurement and calculation module (6) is designed to measure a current flow via the Rogowski coils (5), to evaluate per unit time and to distinguish an arcing fault which has occurred upstream of a protective device of the plug-in unit from a short circuit by comparing the measured current flow with a current limit of the protective device and, in the event of the arcing fault which has occurred upstream of the protective device of the plug-in unit, to determine whether the measured current flow is greater than the current limit of the protective device.

2. Plug-in unit according to Claim 1, **characterized in that** the measurement and calculation module (6) ascertains and evaluates the I² *t values in the microsecond range.

3. Plug-in unit according to Claim 1 or 2, **characterized in that** fuses and/or moulded case circuit breakers, MCCBs, and/or current-carrying elements having a protective function and/or current-carrying elements having a protective function and at least one further function are arranged as protective device in the branches (2).

4. Plug-in unit according to one of Claims 1 to 3, **characterized in that** an arc quenching device, AQD device, can be used to produce a short circuit in order to immediately quench the arcing fault in the event that a fault is ascertained.

5. Plug-in unit according to Claim 4, **characterized in that** the current flow downstream of the short circuit is switched off by the AQD via an incoming feeder circuit breaker.

6. Plug-in unit according to Claim 4, **characterized in that** the current flow downstream of the short circuit is switched off via a disconnector or a disconnecting switch or a current-carrying element having a disconnector function or a current-carrying element having a disconnector function and at least one further function.

7. Plug-in unit according to one of Claims 1 to 6, **characterized in that** the measurement and calculation module (6) can be used to protect respective disconnecting contacts (9) of the branches (2) in plug-in unit technology and contacting areas at the cubicle busbar (3) from damage due to excessive flowing currents per unit time.

## Revendications

1. Tiroir pour la constitution d'une dérivation d'une installation de commutation en basse tension ayant des panneaux d'alimentation et des panneaux de départ, dans lequel le tiroir a un dispositif de contrôle d'arc électrique parasite ayant un module (6) de détection et de calcul et ayant une liaison électrique d'une barre de connexion de l'installation de commutation en basse tension à une bobine (5) de Rogowski montée par rapport à la dérivation, dans lequel le module (6) de détection et de calcul est constitué pour mesurer un flux de courant par les bobines (5) de Rogowski, pour l'évaluer par unité de temps et pour distinguer un arc électrique perturbateur, créé avant un organe de protection du tiroir, d'un court-circuit, en comparant le flux de courant mesuré à une limitation de courant de l'organe de protection et pour détecter des arcs électriques perturbateurs créés avant l'organe de protection du tiroir, si le flux de courant mesuré est plus grand que la limitation de courant de l'organe de protection.

2. Tiroir suivant la revendication 1, **caractérisé en ce que** le module (6) de détection et de calcul trouve et évalue les valeurs I²*t dans le domaine de la microseconde.

3. Tiroir suivant la revendication 1 ou 2, **caractérisé en ce qu'**il est monté, comme organe de protection dans les dérivations (2), des fusibles et/ou des moulded case circuit breaker, MCCB, et/ou des éléments conduisant le courant ayant une fonction de protection et/ou des éléments conduisant le courant ayant une fonction de protection et au moins une autre fonction.

4. Tiroir suivant l'une des revendications 1 à 3, **caractérisé en ce que**, au moyen d'un appareil Arc Quenching Device, appareil AQD, il est produit un court-circuit pour éteindre sans délai l'arc électrique perturbateur dans le cas où un défaut est trouvé.

5. Tiroir suivant la revendication 4, **caractérisé en ce qu'**une interruption du flux de courant est formée en aval du court-circuit, par l'AQD, par l'intermédiaire d'un interrupteur d'alimentation.

6. Tiroir suivant la revendication 4, **caractérisé en ce qu'**une interruption du flux de courant est formée en aval du court-circuit par un sectionneur ou un interrupteur sectionneur ou un élément conduisant le courant ayant une fonction de sectionneur ou un élément conduisant le courant ayant une fonction de sectionneur et au moins une autre fonction.

7. Tiroir suivant l'une des revendications 1 à 6, **caractérisé en ce que** chaque contact (9) de séparation des dérivations (2) dans la technique d'embrochage et des surfaces de mise en contact sur la barre (3) de connexion doivent être protégés avant un endommagement par des courants trop grands par unité de temps au moyen du module (6) de détection et de calcul.
